# EUROPÄISCHE PATENTANMELDUNG

(11) **EP 2 022 571 A1**
(43) Veröffentlichungstag der Anmeldung: **11.02.2009**
(21) Anmeldenummer: 07113870.5
(22) Anmeldetag: 06.08.2007
(51) Int. Cl.: B05C 5/02, B05C 11/10

(54) **Dosiervorrichtung zum dosieren eines fluids**

(71) Anmelder: ViscoTec Pumpen-u. Dosiertechnik GmbH, 84513 Töging a. Inn (DE)
(72) Erfinder: Kelsch, Horst, 84513, Töging a. Inn (DE)
(74) Vertreter: Charles, Glyndwr

(57) **Zusammenfassung**

Erfindungsgemäß wird eine Dosiervorrichtung (1) zum Dosieren eines Fluids vorgeschlagen, welche aufweist:
- eine Pumpenvorrichtung (2) zum Fördern des Fluids; und
- einen Endstutzen (3) zur Ausgabe des geförderten Fluids, welcher einen integrierten Nadeladapter (4) zur Kopplung einer Düsennadel aufweist.

## Beschreibung

Die Erfindung betrifft eine Dosiervorrichtung zum Dosieren eines Fluids.

Das technische Gebiet der Erfindung betrifft die Dosierung von Fluiden oder fluiden Medien, wie beispielsweise Kleb-oder Dichtstoffen, Farben, Suspensionen, viskosen Rohstoffen, Emulsionen oder Fetten. Dosiervorrichtungen, welche für eine solche Dosierung geeignet sind, können auf einer Zahnradpumpe oder einer Exzenterschneckenpumpe basieren oder beispielsweise als eine Spindelfördereinrichtung ausgebildet sein. Eine solche Dosiervorrichtung kann auch als Ventil, beispielsweise als Spindelventil, als Druck-Zeit-Ventil oder als Volumenventil ausgebildet sein.

Um kleine Mengen oder Kleinstmengen des Fluides zu dosieren, werden Dosiernadeln eingesetzt. Die einzusetzende Dosiernadel wird mit der jeweiligen Dosiervorrichtung gekoppelt. Für diese Koppelung ist der Anmelderin intern ein aufschraubbarer Adapter bekannt, welcher auf einen Endstutzen der Dosiervorrichtung aufgeschraubt wird. Der verschraubbare Adapter weist beispielsweise die Dosiernadel auf.

Nachteiligerweise kann aber bei der Verschraubung des Adapters mit der Dosiervorrichtung ein Totraum entstehen. Der entstandene Totraum kann die Wiederholbarkeit und/oder die Steuerbarkeit der Dosierung verschlechtern.

Des Weiteren ist ein solcher entstandener Totraum nachteilig, wenn das dosierte Fluid oder das dosierte fluide Medium zurückgesaugt werden soll, weil dann die Wahrscheinlichkeit für eine Blasenbildung im Kopplungsabschnitt zwischen dem Adapter und der Dosiervorrichtung deutlich erhöht ist.

Demnach ist es eine Aufgabe der vorliegenden Erfindung, den Totraum bei der Kopplung der Dosiervorrichtung mit der Dosiernadel zu reduzieren oder zu minimieren.

Die gestellte Aufgabe wird durch eine Dosiervorrichtung mit den Merkmalen des Patentanspruchs 1 gelöst.

Demgemäß wird eine Dosiervorrichtung zum Dosieren eines Fluids vorgeschlagen, welche aufweist:
- eine Pumpenvorrichtung zum Fördern des Fluids; und
- einen Endstutzen zur Ausgabe des geförderten Fluids, welcher einen integrierten Nadeladapter zur Kopplung einer Düsennadel aufweist.

Die Vorteile der vorliegenden Erfindung sind die Folgenden: Durch die einstückige Ausbildung des Endstückes oder Endstutzens und des Nadeladapters wird ein potenziell entstehender Totraum bei der Kopplung von Endstück und Nadeladapter vermieden. Somit ist die Wiederholbarkeit der Dosierung sowie die Steuerbarkeit der Dosierung deutlich verbessert. Des Weiteren ist eine Blasenbildung durch die Vermeidung des Totraums insbesondere beim Zurücksaugen von bereits dosiertem Fluid vermindert.

Ein weiterer Vorteil liegt darin, dass der notwendige Bauraum durch die Integration des Nadeladapters in den Endstutzen der Dosiervorrichtung minimiert ist, so dass auch die Reaktionszeiten beim Dosieren oder beim Dosiervorgang minimiert sind. Dies ist insbesondere von entscheidender Bedeutung bei der Dosierung von Kleinstmengen des Fluids oder des fluiden Mediums.

Vorteilhafte Ausgestaltungen und Weiterbildungen der Erfindung ergeben sich aus den Unteransprüchen sowie der Beschreibung unter Bezugnahme auf die Zeichnungen.

Gemäß einer bevorzugten Ausgestaltung weist die Dosiervorrichtung zumindest einen ersten Teil und einen zweiten Teil auf, wobei der erste Teil ein erstes Gehäuse, einen Motor mit einer Getriebevorrichtung und eine mit dem Motor gekoppelte Motorwelle mit einer ersten Kopplungsklaue aufweist, wobei der zweite Teil zumindest ein zweites Gehäuse und eine Antriebswelle mit einer zweiten Kopplungsklaue, welche mit der ersten Kopplungsklaue koppelbar ist, aufweist, wobei der erste Teil und der zweite Teil zumindest mittels der ersten und zweiten Kopplungsklaue lösbar verbindbar sind.

Vorteilhafterweise kann durch die lösbare Verbindung zwischen dem ersten Teil und dem zweiten Teil der Dosiervorrichtung ein beliebiger, geeigneter Motor mit einer Getriebevorrichtung mit dem zweiten Teil der Dosiervorrichtung, insbesondere der Pumpenvorrichtung, gekoppelt werden. Dies ergibt sich insbesondere durch die vorgesehenen Kupplungsklauen an der Antriebswelle des zweiten Teils und der Motorwelle des ersten Teils. Durch die integrierten Kupplungsklauen an der Antriebswelle und der Motorwelle ergibt sich weiter der Vorteil, dass für die gesamte Dosiervorrichtung eine reduzierte Baulänge ermöglicht ist. Des Weiteren kann die Kupplung im endkuppelten Zustand durch das Kupplungsgehäuse geschützt werden, sodass nicht nur die Kupplung als solche, sondern auch die Bedienperson geschützt ist. Bei einer beispielsweisen Gesamtlänge von etwa 20 cm der Dosiervorrichtung kann sich durch die integrierten Kupplungsklauen die Länge um 10-15 mm und das Gewicht um etwa 1 g reduzieren.

Gemäß einer weiteren bevorzugten Ausgestaltung sind der erste Teil und der zweite Teil mittels der ersten und zweiten Kopplungsklaue und mittels einer Schnappverbindung zwischen dem ersten Gehäuse und dem zweiten Gehäuse lösbar verbindbar. Ein Vorteil dieser Ausgestaltung liegt darin, dass durch die zusätzliche Schnappvorrichtung zwischen dem ersten Gehäuse und dem zweiten Gehäuse die Kopplung zwischen dem ersten und dem zweiten Teil verbessert ist.

Gemäß einer weiteren bevorzugten Ausgestaltung weist der zweite Teil das zweite Gehäuse, die Antriebswelle mit der zweiten Kopplungsklaue, eine mit der Antriebswelle gekoppelte flexible Welle und eine Exzenterschneckenpumpe zum Fördern des Fluids von einer Fluid-Zuführvorrichtung zu dem Endstützen auf. Die mit der Antriebswelle gekoppelte flexible Welle ist vorzugsweise hermetisch abgedichtet, gelenkfrei und reinigungsfreundlich.

Gemäß einer weiteren bevorzugten Ausgestaltung weist das zweite Teil einen produktbehafteten Teil und einen nicht-produktbehafteten Teil auf, welche derart ausgestaltet sind, dass sie lösbar verbindbar sind. Durch diese Ausgestaltung der vorliegenden Erfindung weist die Dosiervorrichtung insgesamt drei von einander lösbar verbindbare Teile auf. Ein erster Teil integriert den Motor mit der Getriebevorrichtung, der zweite Teil integriert den nicht-produktbehafteten Teil der Pumpenvorrichtung und der dritte Teil integriert den produktbehafteten Teil der Pumpenvorrichtung. Somit ist insbesondere das Gehäuse des produktbehafteten Teils der Pumpenvorrichtung, insbesondere im Bereich zwischen einer Dichtungsvorrichtung und einer Fluid-Zufuhrvorrichtung, demontierbar und somit bedienerfreundlich zu reinigen. Vorteilhafterweise muss somit der restliche Teil der Pumpenvorrichtung, insbesondere der nicht-produktbehaftete Teil, für eine Reinigung nicht zerlegt werden. Des Weiteren kann das Gehäuse des produktbehafteten Teils den Stator der Exzenterschneckenpumpe integrieren, sodass dieser für eine Reinigung nicht ausgebaut werden muss. Ferner muss die Dichtungsfläche des Stators der Exzenterschneckenpumpe nicht gereinigt werden, sodass dieser für eine Reinigung nicht ausgebaut werden muss. Ferner muss die Dichtungsfläche des Stators der Exzenterschneckenpumpe nicht gereinigt werden, sodass ein schnelleres Spülen des Pumpengehäuses ermöglicht ist.

Gemäß einer weiteren bevorzugten Ausgestaltung ist ein Kupplungsstern zum Ausgleich eines Versatzes und/oder zur Dämpfung zwischen der ersten Kopplungsklaue und der zweiten Kopplungsklaue bei der Verbindung des ersten Teils mit dem zweiten Teil angeordnet.

Die Verwendung des Kupplungssterns ermöglicht vorteilhafterweise, dass ein Versatz zwischen den beiden Kupplungsklauen ausgeglichen wird. Ferner werden mechanische Schwingungen zwischen den beiden Kupplungsklauen bzw. zwischen den beiden zu koppelnden Wellen, der Motorwelle und der Antriebswelle, ausgeglichen. Der Kupplungsstern ist vorzugsweise aus einem Elastomer oder aus Gummi.

Gemäß einer weiteren bevorzugten Ausgestaltung weist das zweite Gehäuse einen runden Körper und/oder abgeflachte Seiten auf, um mittels eines Rundspannsystems aufnehmbar zu sein und/oder um mit mehreren Dosiervorrichtungen in einem Block anordbar zu sein.

Durch die Anordnung der abgeflachten Seiten, insbesondere im zweiten Gehäuse der Dosiervorrichtung, ergibt sich die Möglichkeit der Verwendung der Dosiervorrichtung in einem Block mit weiteren Dosiervorrichtungen. Somit wird ein Einbau auf engstem Raum ermöglicht. Weiter ist durch eine runde Ausgestaltung des ersten Gehäuses eine Spannaufnahme mittels des Rundspannsystems ermöglicht.

Gemäß einer weiteren bevorzugten Ausgestaltung weist der Endstutzen eine integrierte Drucksensorvorrichtung oder ein Kopplungsmittel auf, welches dazu geeignet ist, den Endstutzen mit der Drucksensorvorrichtung zu koppeln. Vorteilhafterweise kann mittels der Drucksensorvorrichtung der Dosierdruck während der Dosierung des Fluids gemessen werden. In Abhängigkeit des gemessenen Dosierdruckes kann eine Störung, beispielsweise ein Luftblase im Fluid oder eine Schwankung des Dosierdruckes, detektiert werden.

Gemäß einer weiteren bevorzugten Ausgestaltung ist eine Überwurfmutter vorgesehen, welche auf ein Außengewinde des Endstutzens und auf ein Außengewinde des zweiten Gehäuses, insbesondere im Bereich des produktbehafteten Teils, aufschraubbar ist.

Gemäß einer weiteren bevorzugten Ausgestaltung ist der Endstutzen dazu geeignet, einen Stator einer Exzenterschneckenpumpe der Dosiervorrichtung zu spannen. Vorteilhafterweise kann somit der Stator und/oder eine Dichtung des Stators definiert gepresst werden. Somit wird ein Verdrücken oder Verdrängen des Elastomer-Teils der Exzenterschneckenpumpe verhindert.

Ferner kann durch die Integration des Stators in das Gehäuse des produktbehafteten Teils der Pumpenvorrichtung eine Verdrehsicherung für den Stator ermöglicht werden. Somit wird verhindert, dass sich der Stator beim Betrieb der Dosiervorrichtung drehen kann.

Die Erfindung wird nachfolgend anhand der in den schematischen Figuren angegebenen Ausführungsbeispielen näher erläutert. Es zeigen:
- Fig. 1: eine schematische Längsschnittansicht eines Aus- führungsbeispiels der erfindungsgemäßen Dosiervor- richtung;
- Fig. 2: eine schematische perspektivische Längsschnittan- sicht des Ausführungsbeispiels der erfindungsgemä- ßen Dosierungsvorrichtung nach Fig. 1;
- Fig. 3: eine schematische perspektivische Darstellung des Ausführungsbeispiels der Dosierungsvorrichtung nach den Fig. 1 und 2;
- Fig. 4: eine schematische perspektivische Längsschnittan- sicht der Kopplung des ersten und zweiten Teils der erfindungsgemäßen Dosierungsvorrichtung;
- Fig. 5: eine schematische perspektivische Detail- Darstellung der Kopplung des ersten und zweiten Teils der Dosierungsvorrichtung gemäß Fig. 4;
- Fig. 6: eine schematische perspektivische Darstellung ei- nes Ausführungsbeispiels des Endstutzens der er- findungsgemäßen Dosierungsvorrichtung; und
- Fig. 7: eine schematische perspektivische Darstellung ei- nes weiteren Ausführungsbeispiels des Endstutzens der erfindungsgemäßen Dosierungsvorrichtung.

In allen Figuren sind gleiche bzw. funktionsgleiche Elemente und Einrichtungen - sofern nichts anderes angegeben ist - mit denselben Bezugszeichen versehen.

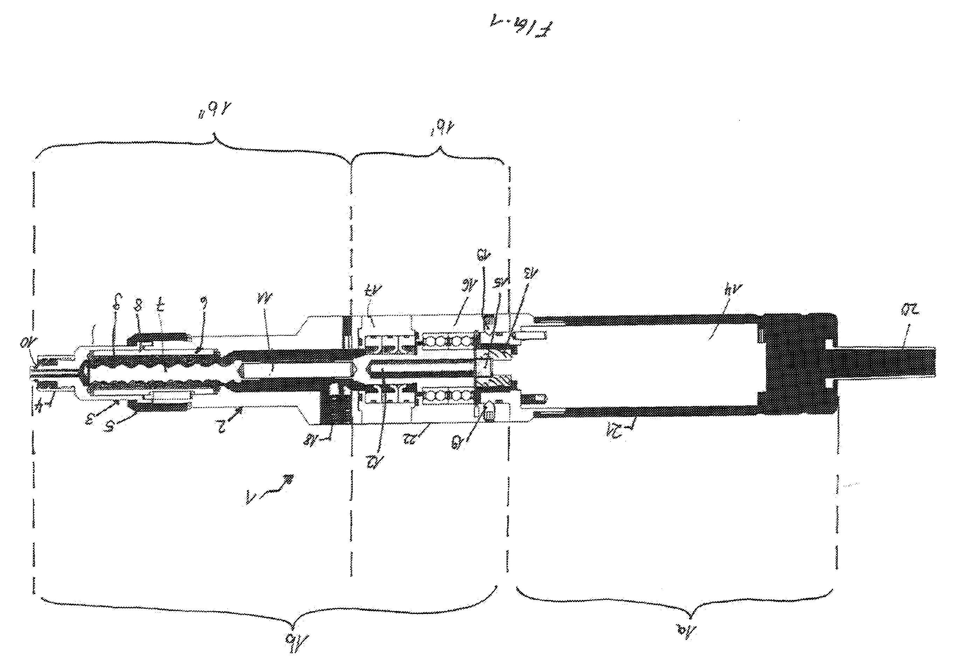

Fig. 1 zeigt eine schematische Längsschnittansicht eines Ausführungsbeispiels der erfindungsgemäßen Dosiervorrichtung 1 zum Dosieren eines Fluids. Die Dosiervorrichtung 1 weist eine Pumpenvorrichtung 2 zum Fördern des Fluids und einen Endstutzen 3 zur Ausgabe des geförderten Fluids auf. Der Endstutzen 3 hat einen integrierten Nadeladapter 4 zur Kopplung einer Düsennadel, mittels welcher das Fluid in einer definierten Kleinstmenge dosiert ausgegeben werden kann.

Die Dosiervorrichtung 1 weist zumindest einen ersten Teil 1a und einen zweiten Teil 1b auf. Der erste Teil 1a der Dosiervorrichtung 1 weist ein erstes Gehäuse 21, einen Motor 14 mit einer Getriebevorrichtung und eine mit dem Motor 14 gekoppelte Motorwelle 13 auf. Ferner ist der Motor 14 mittels eines Kabels 20 mit einer Stromversorgungseinrichtung (nicht gezeigt) koppelbar. Die mit dem Motor 14 gekoppelte Motorwelle 13 weist eine erste Kopplungsklaue 29a auf.

Der zweite Teil 1b der Dosiervorrichtung 1 hat zumindest ein zweites Gehäuse 22, eine Antriebswelle 12 mit einer zweiten Kupplungsklaue 29b, welche mit der ersten Kupplungsklaue 29a koppelbar ist. Ferner kann der zweite Teil 1b der Dosiervorrichtung 1 eine mit der Antriebswelle 12 gekoppelte flexible Welle 11 und eine Exzenterschneckenpumpe 6 zum Fördern des Fluids von einer Fluid-Zufuhrvorrichtung 18 zu den Stutzen 3 aufweisen.

Die Exzenterschneckenpumpe 6 weist vorzugsweise einen mit dem Gehäuse des Endstutzens 3 gekoppelten Stator 8, einen mit der flexiblen Welle 11 gekoppelten Rotor 7 und eine zwischen dem Rotor 7 und dem Stator 8 angeordnetes Elastomer-Teil 9 auf.

Der erste Teil 1a und der zweite Teil 1b der Dosiervorrichtung 1 sind vorzugsweise zumindest mittels der ersten und zweiten Kupplungsklaue 29a, 29b lösbar verbindbar. Insbesondere sind der erste Teil 1a und der zweite Teil 1b zusätzlich mittels einer Schnappverbindung 19 zwischen dem ersten Gehäuse 21 und dem zweiten Gehäuse 22 lösbar verbindbar. Vorzugsweise weist der zweite Teil einen produktbehafteten Teil 1b' und einen nicht-produktbehafteten Teil 1b'' auf, welche derart ausgestaltet sind, dass sie, insbesondere im Bereich zwischen einer Dichtungsvorrichtung 17 und der Fluid-Zufuhrvorrichtung 18 lösbar verbindbar sind. Somit kann die Dosierungsvorrichtung 1 insgesamt in drei Teile mittels einer lösbaren Verbindung zerlegt werden. Dies sind insbesondere ein Teil 1a mit dem Motor 14 und der Getriebevorrichtung, ein nicht-produktbehafteter Teil 1b'' der Pumpenvorrichtung 2 und ein produktbehafteter Teil 1b' der Pumpenvorrichtung 2. Weiter kann an der Dichtungsvorrichtung 17 eine Lagervorrichtung 16 zur Lagerung der Antriebswelle 12 vorgesehen werden.

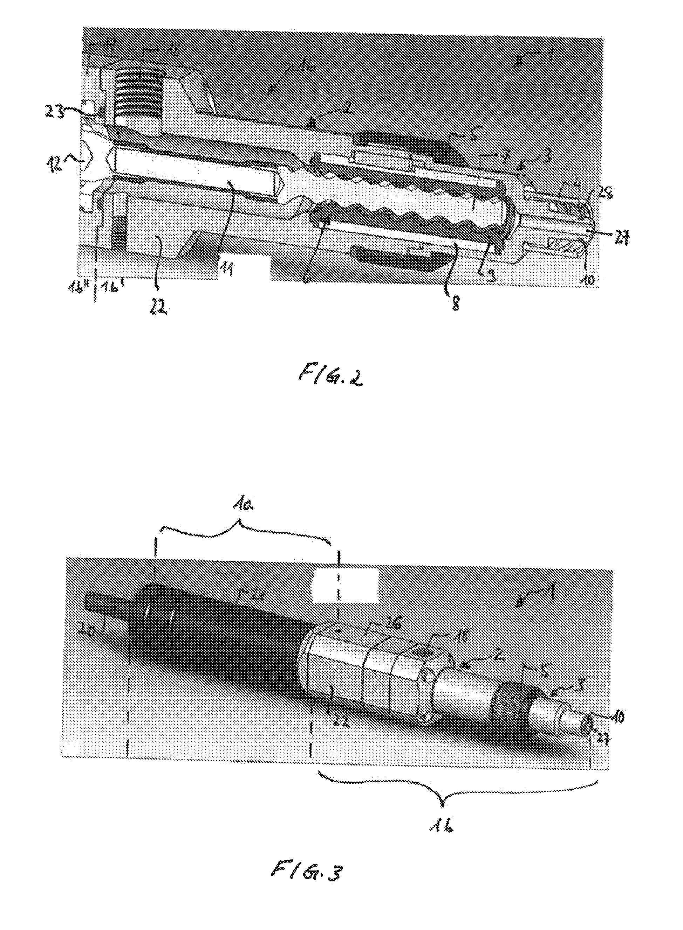

Ferner weist der Endstutzen 3 den integrierten Nadeladapter 4 auf, welcher im Detail mit Bezug auf die Fig. 2 beschrieben wird. Dazu zeigt Fig. 2 eine perspektivische Längsschnittansicht des Ausführungsbeispiels der erfindungsgemäßen Dosierungsvorrichtung 1 nach Fig. 1. Fig. 2 zeigt insbesondere im Detail die Kopplung zwischen dem produktbehafteten Teil 1b' und den nicht-produktbehafteten Teil 1b'' des zweiten Teils 1b der Dosierungsvorrichtung 1, die zur verbesserten Kopplung zwischen dem Endstutzen 3 und der Pumpenvorrichtung 2 vorgesehene Überwurfmutter 5 und den in den Endstutzen 3 integrierten Nadeladapter 4.

Für eine Abdichtung bei der Kopplung oder Verbindung des produktbehafteten Teils 1b' mit dem nicht-produktbehafteten Teil 1b'' ist ein Dichtring 23 vorgesehen.

Die Überwurfmutter 5 ist vorzugsweise auf ein Außengewinde des Endstutzens 3 und auf ein Außengewinde des zweiten Gehäuses 22, insbesondere im Bereich des produktbehafteten Teils 1b' des zweiten Teils 1b, aufschraubbar.

Der Nadeladapter 4 hat vorzugsweise einen Luer-Konus 28 mit weiblichem Innenkegel. Die zu koppelnde Düsennadel (nicht gezeigt) hat demnach vorzugsweise als Koppelelement einen Luer-Konus mit männlichem Außenkegel.

Des Weiteren ist vorzugsweise ein Kanal 27 in dem Nadeladapter 4 zur Förderung des von der Pumpenvorrichtung 2 geförderten Fluids in die Dosiernadel vorgesehen. Der Kanal 27 weist vorzugsweise eine Nut und einen in der Nut angeordneten O-Ring 10 zum Abdichten des aus dem Luer-Konus 28 mit weiblichem Innenkegel und dem Luer-Konus mit männlichem Außenkegel der Dosiernadel gebildeten Luer-Lock auf.

Fig. 3 zeigt eine perspektivische Darstellung des Ausführungsbeispiels der Dosiervorrichtung 1 nach den Fig. 1 und 2. Fig. 3 zeigt insbesondere, dass das zweite Gehäuse 22 einen runden Körper und/oder abgeflachte Seiten 26 aufweisen kann, um mittels eines Rundspannsystems aufnehmbar zu sein und/oder um mit mehreren Dosiervorrichtungen 1 in einem Block anordbar zu sein.

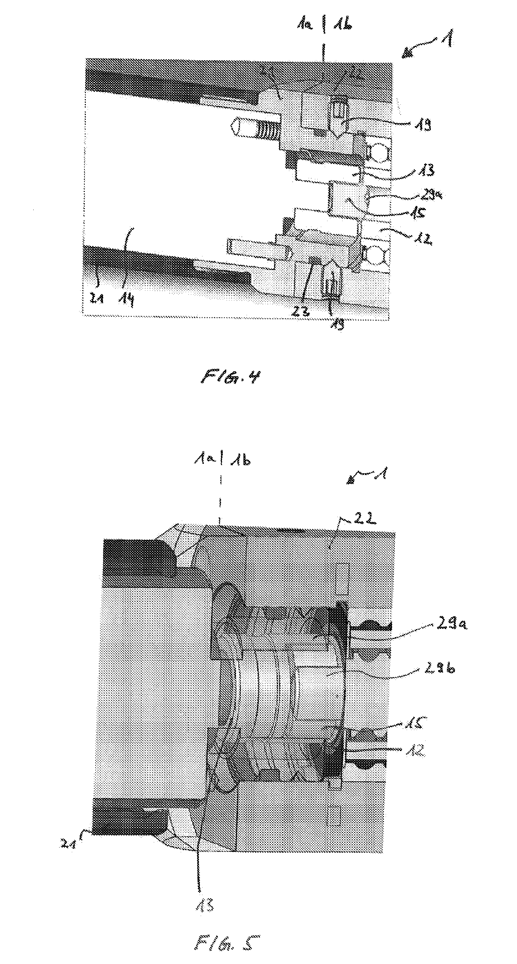

Fig. 4 zeigt eine perspektivische Längsschnittansicht der Kopplung des ersten Teils 1a mit dem zweiten Teil 1b der Dosiervorrichtung 1. Dabei zeigt Fig. 4 im Detail insbesondere, dass der Kupplungsstern 15 zum Ausgleich eines Versatzes und/oder zur Dämpfung zwischen der ersten Kupplungsklaue 29a und der zweiten Kupplungsklaue 29b (siehe insbesondere Fig. 5) angeordnet ist. Dazu zeigt Fig. 5 eine perspektivische Detail-Darstellung des Ausführungsbeispiels der Kopplung nach Fig. 4.

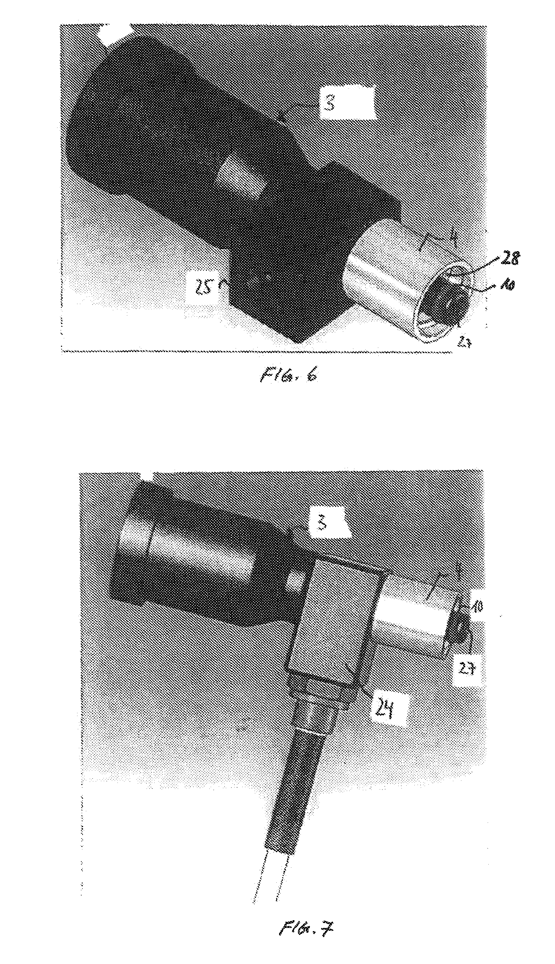

Fig. 6 zeigt eine schematische perspektivische Darstellung eines Ausführungsbeispiels eines Endstutzens 3 der Dosiervorrichtung 1. Gemäß dem Ausführungsbeispiel nach Fig. 6 weist der Endstutzen 3 den Nadeladapter 4 sowie ein Kopplungsmittel 25 auf. Das Kopplungsmittel 25 ist dazu geeignet, den Endstutzen 3 mit einer Drucksensorvorrichtung zu koppeln. Ferner zeigt Fig. 6 nochmals den als Luer-Lock ausgebildeten Nadeladapter 4 mit dem Luer-Konus 28 und der Abdichtung durch den O-Ring 10. Der O-Ring 10 dichtet zwischen dem abgebildeten Nadeladapter 4 und einer zu koppelnden Dosiernadel ab. Diese Abdichtung mittels des O-Rings 10 hat ihren besonderen Vorteil beim Zurücksaugen bereits dosierten Fluids.

Fig. 7 zeigt eine schematische perspektivische Darstellung eines weiteren Ausführungsbeispiels des Endstutzens 3 der erfindungsgemäßen Dosiervorrichtung 1. Das Ausführungsbeispiel des Endstutzens 3 gemäß Fig. 7 unterscheidet sich von dem Ausführungsbeispiel des Endstutzens 3 gemäß Fig. 6 dahingehend, dass der Endstutzen 3 gemäß Fig. 7 nicht ein Kopplungsmittel 25 zur Kopplung einer Drucksensorvorrichtung aufweist, sondern dass die Drucksensorvorrichtung 24 in dem Endstutzen 3 integriert ist. Die Drucksensorvorrichtung 24 ist insbesondere dazu geeignet, einen durch die Dosiervorrichtung 1, dabei insbesondere durch die Pumpenvorrichtung 2, bereitgestellten Dosierdruck während einer Dosierung des Fluids zu steuern. Ferner kann die Drucksensorvorrichtung 24 einen Drucksensor und/oder ein Detektionsmittel aufweisen oder mit einem solchen gekoppelt sein. Der Drucksensor (nicht gezeigt) ist insbesondere dazu geeignet, einen Dosierdruck während der Dosierung des Fluids zu messen. Das Detektionsmittel ist vorzugsweise dazu geeignet, in Abhängigkeit des gemessenen Dosierdrucks eine Störung, beispielsweise eine Luftblase im Fluid oder eine Schwankung im Dosierdruck, zu detektieren.

Beispiele für das Fluid oder das fluide Medium sind Kleb-und Dichtstoffe, wie Silicone, Zwei-Komponenten-Kleber, Verguss- und Dichtmassen, Lötpasten, RTV-Silicone, anaerobe Klebstoffe, Cyanacrylate, Epoxidharze und Polyurethane. Ein weiteres Beispiel für ein Fluid kann eine Farbe, wie eine UV-Farbe, ein Lack, eine Farbpaste, eine Offset-Farbe oder ein Additiv sein. Weitere geeignete Beispiele für das zu dosierende Fluid sind Suspensionen, viskose Rohstoffe, Emulsionen und Fette.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar.

### Bezugszeichenliste

- 1: Dosiervorrichtung
- 1a: erster Teil
- 1b: zweiter Teil
- 1b': produktbehafteter Teil
- 1b'': nicht-produktbehafteter Teil
- 2: Pumpenvorrichtung
- 3: Endstutzen
- 4: Nadeladapter
- 5: Überwurfmutter
- 6: Exzenterschneckenpumpe
- 7: Rotor
- 8: Stator
- 9: Elastomer-Teil
- 10: O-Ring
- 11: flexible Welle
- 12: Antriebswelle
- 13: Motorwelle
- 14: Motor mit Getriebevorrichtung
- 15: Kupplungsstern
- 16: Lagervorrichtung
- 17: Dichtungsvorrichtung
- 18: Fluid-Zuführvorrichtung
- 19: Schnappverbindung
- 20: Kabel
- 21: erstes Gehäuse
- 22: zweites Gehäuse
- 23: Dichtungsring
- 24: Drucksensorvorrichtung
- 25: Kopplungsmittel
- 26: abgeflachte Seite
- 27: Kanal
- 28: Luer-Konus
- 29a, 29b: Kupplungskralle

## Patentansprüche

1. Dosiervorrichtung (1) zum Dosieren eines Fluids, mit:
a) einer Pumpenvorrichtung (2) zum Fördern des Fluids; und
b) mit einem Endstutzen (3) zur Ausgabe des geförderten Fluids, welcher einen integrierten Nadeladapter (4) zur Kopplung einer Düsennadel aufweist.

2. Dosiervorrichtung nach Anspruch 1,
**dadurch gekennzeichnet,**
**dass** die Dosiervorrichtung (1) zumindest einen ersten Teil (1a) und einen zweiten Teil (1b) aufweist, wobei der erste Teil ein erstes Gehäuse (21), einen Motor (14) mit einer Getriebevorrichtung und eine mit dem Motor (14) gekoppelte Motorwelle (13) mit einer ersten Kopplungsklaue (29a) aufweist,
wobei der zweite Teil (1b) zumindest ein zweites Gehäuse (22) und eine Antriebswelle (12) mit einer zweiten Kopplungsklaue (29b), welche mit der ersten Kopplungsklaue (29a) koppelbar ist, aufweist,
wobei der erste Teil (1a) und der zweite Teil (1b) zumindest mittels der ersten und zweiten Kopplungsklaue (29a, 29b) lösbar verbindbar sind.

3. Dosiervorrichtung nach Anspruch 2,
**dadurch gekennzeichnet,**
**dass** der erste Teil (1a) und der zweite Teil (1b) mittels der ersten und zweiten Kopplungsklaue (29a, 29b) und mittels einer Schnappverbindung (19) zwischen dem ersten Gehäuse (21) und dem zweiten Gehäuse (22) lösbar verbindbar sind.

4. Dosiervorrichtung nach Anspruch 2 oder 3,
**dadurch gekennzeichnet,**
**dass** der zweite Teil (1b) das zweite Gehäuse (22), die Antriebswelle (12) mit der zweiten Kopplungsklaue, eine mit der Antriebswelle (12) gekoppelte flexible Welle (11) und eine Exzenterschneckenpumpe (6) zum Fördern des Fluids von einer Fluid-Zuführvorrichtung (18) zu dem Endstützen (3) aufweist.

5. Dosiervorrichtung nach Anspruch 2, 3 oder 4,
**dadurch gekennzeichnet,**
**dass** das zweite Teil (1b) einen produktbehafteten Teil (1b') und einen nicht-produktbehafteten Teil (1b'') aufweist, welche derart ausgestaltet sind, dass sie lösbar verbindbar sind.

6. Dosiervorrichtung oder einem der Ansprüche 2 bis 5,
**dadurch gekennzeichnet,**
**dass** ein Kupplungsstern (15) zum Ausgleich eines Versatzes und/oder zur Dämpfung zwischen der ersten Kopplungsklaue (29a) und der zweiten Kopplungsklaue (29b) bei der Verbindung des ersten Teils (1a) mit dem zweiten Teil (1b) angeordnet ist.

7. Dosiervorrichtung nach Anspruch 2 oder einem der Ansprüche 3 bis 6,
**dadurch gekennzeichnet,**
**dass** das zweite Gehäuse (22) einen runden Körper und/oder abgeflachte Seiten (26) aufweist, um mittels eines Rundspannsystems aufnehmbar zu sein und/oder um mit mehreren Dosiervorrichtungen in einem Block anordbar zu sein.

8. Dosiervorrichtung nach Anspruch 1 oder einem der Ansprüche 2 bis 7,
**dadurch gekennzeichnet,**
**dass** der Endstutzen (3) eine integrierte Drucksensorvorrichtung (24) oder ein Kopplungsmittel (25) aufweist, welches dazu geeignet ist, den Endstutzen (3) mit der Drucksensorvorrichtung (24) zu koppeln.

9. Dosiervorrichtung nach Anspruch 1 oder einem der Ansprüche 2 bis 8,
**dadurch gekennzeichnet,**
**dass** eine Überwurfmutter (5) vorgesehen ist, welche auf ein Außengewinde des Endstutzens (3) und auf ein Außengewinde des zweiten Gehäuses (22), insbesondere im Bereich des produktbehafteten Teils (1b'), aufschraubbar ist.

10. Dosiervorrichtung nach Anspruch 1 oder einem der Ansprüche 2 bis 9,
**dadurch gekennzeichnet,**
**dass** der Endstutzen (3) dazu geeignet ist, einen Stator (8) einer Exzenterschneckenpumpe (6) der Dosiervorrichtung (1) zu spannen.
